Europäisches Patentamt

European Patent Office

Office européen des brevets

(11) Publication number: **0 516 874 A1**

# EUROPEAN PATENT APPLICATION

(21) Application number: **91109288.0**

(22) Date of filing: **06.06.91**

(51) Int. Cl.5: **B32B 27/12**, A43B 7/22, A43B 13/18, A43B 21/26

(43) Date of publication of application:
**09.12.92 Bulletin 92/50**

(84) Designated Contracting States:
**DE ES FR GB IT SE**

(71) Applicant: **MEDICAL MATERIALS CORPORATION**
**1150 Calle Suerte**
**Camarillo, CA 93010(US)**

(72) Inventor: **Fitchmun, Douglas R.**
**24054 Mariano Street**
**Woodland Hills, California 91367(US)**

(74) Representative: **Patentanwälte Grünecker,**
**Kinkeldey, Stockmair & Partner**
**Maximilianstrasse 58**
**W-8000 München 22(DE)**

(54) Shoe inserts.

(57) An arch support (24) in the arch support portion (20) of a shoe may be shaped to the individual configuration of a person's foot. It is made from a material whose torsional deflection is greater than its longitudinal and lateral deflections and includes a layer of a thermoplastic material (26) and layers of a fabric (28,30) disposed on opposite sides of, and impregnated with, the thermoplastic material. The fabric contains threads disposed in two coordinate directions defining a warp (longitudinal direction of the shoe) and a weft (lateral direction). A heel of the shoe includes viscoelastic material (52) contiguous to the heel portion of the shoe to absorb kinetic energy. The heel includes a member (54) to convert kinetic energy to potential energy upon contact of the shoe with the ground and to convert potential energy to kinetic energy upon the lifting of the shoe. This member (54) converts potential energy to kinetic energy in the longitudinal direction of the shoe. Another member (40) at the ball portion (18) of the shoe stores and releases energy, e.g. in the longitudinal direction.

FIG. 1

This invention relates to shoes and more particularly relates to shoes having inserts for enhancing the efficiency of the wearer in walking or running and for enhancing the comfort of the shoes to, and the tolerance fo the shoes by, the wearer. The invention particularly relates to inserts in the heel, arch support and ball portions of the shoe.

Many individuals require arch supports in shoes because they have flat feet or their feet tend to flatten. If these individuals do not wear arch supports, their feet start to hurt after they have worn the shoes for sometime. With arch supports, however, their feet become supported theoretically in such a manner that they can wear the shoes for long periods of time and walk for long distances without experiencing any pain in their feet.

Although some individuals are helped by using arch supports in their shoes, many are not. One problem is that each arch support has to be individually shaped to provide comfort to the wearer. This is even true of the two shoes in a single pair since the arch in each foot of an individual is different from the other. Another problem has been that the torsional deflection of the material forming the arch support has not been sufficient to provide a comfort of the shoe to, and a tolerance of the shoe by, the wearer.

Another problem of long standing in shoes has been that the shoes are not efficient. A person devotes a considerable amount of energy in walking or running. All of this energy is lost since the shoes do not convert kinetic energy to potential energy in the movement of the foot to the ground. This prevents energy used in the movement of the foot to the ground from being returned to the foot during the movement of the foot from the ground.

Although the soft soles in vogue in recent years may give the wearer the feeling of increased efficiency, these soles do not convert kinetic energy to potential energy in the movement of the foot to the ground and do not convert any potential energy to kinetic energy in the lifting of the foot from the ground. Actually, in many running shoes, any benefits from the use of soft soles are lost after a relatively short period of use, such as five hundred (500) or a thousand (1000) miles, because the material in the soles of the shoes deteriorates relatively quickly from use. A distance of five hundred (500) or a thousand (1000) miles may be travelled by a runner in a relatively short period of time such as two (2) or three (3) months.

The problems discussed above have existed for some time. Furthermore, the problems discussed above have been universal since almost everybody wears shoes. In spite of this, arch supports, when used, do not match properly the characteristics of the wearer's feet and, even when matched properly, do not provide a comfort to, or tolerance by, the wearer. Shoes now in use also do not provide an efficient conversion of energy to minimize the effort in walking or running. These problems continue to exist even though a considerable effort has been made, and significant sums of money have been expended, to resolve these problems.

This invention provides inserts which overcome the problems discussed above. For example, the invention provides arch supports which can be individually shaped to conform to the arches in a wearer's feet. If the arch supports are not initially shaped properly, they can be easily reshaped to conform to the individual characteristics of the arches in the wearer's feet. The arch supports provide for a greater torsional deflection of the foot in the shoe than a longitudinal or a lateral deflection of the foot in the shoe, thereby enhancing the comfort of the shoes to, and tolerance of the shoes by, the wearer.

This invention also provides shoe inserts which convert potential energy to kinetic energy in the downward movement of the feet and convert the potential energy to kinetic energy in the upward movement of the feet. In providing this energy conversion, the inserts can be shaped to direct the converted kinetic energy in the longitudinal direction of the shoe. Furthermore, the insert at the heel of the shoe can be customized so that only a particular portion of the kinetic energy available is converted to potential energy and then reconverted to kinetic energy.

In the drawings:

Figure 1 is a perspective view of a shoe;

Figure 2 is an exploded perspective view of the shoe of Figure 1 and illustrates certain members disposed within the shoe and included within embodiments of this invention;

Figure 3 is an enlarged fragmentary sectional view of one of the members shown in Figure 2 and is taken substantially on the line 3-3 of Figure 2;

Figure 4 is an enlarged perspective view of another of the members shown in Figure 2;

Figure 5 is an enlarged sectional view of the member shown in Figure 4 and is taken substantially on the line 5-5 of Figure 4;

Figure 6 is an enlarged schematic view of one of the layers in the member shown in Figures 3 and 4 and is taken substantially on the line 6-6 of Figure 3;

Figure 7 is a perspective view of the shoe and particularly illustrates the heel arrangement included as one embodiment of this invention;

Figure 8 is an exploded perspective view of the different layers in the heel arrangement shown in Figure 7; and

Figure 9 is a sectional view taken on the line 9-9 of Figure 7 and illustrates in additional detail the different layers in the heel arrangement.

In one embodiment of the invention, a shoe generally indicated at 10 may be constructed in a conventional manner to have a sole 12 and a top portion 14 separated from each other to define a pocket 16 for receiving a wearer's foot. The sole 12 has a ball portion 18, an arch portion 20 and a heel portion 22.

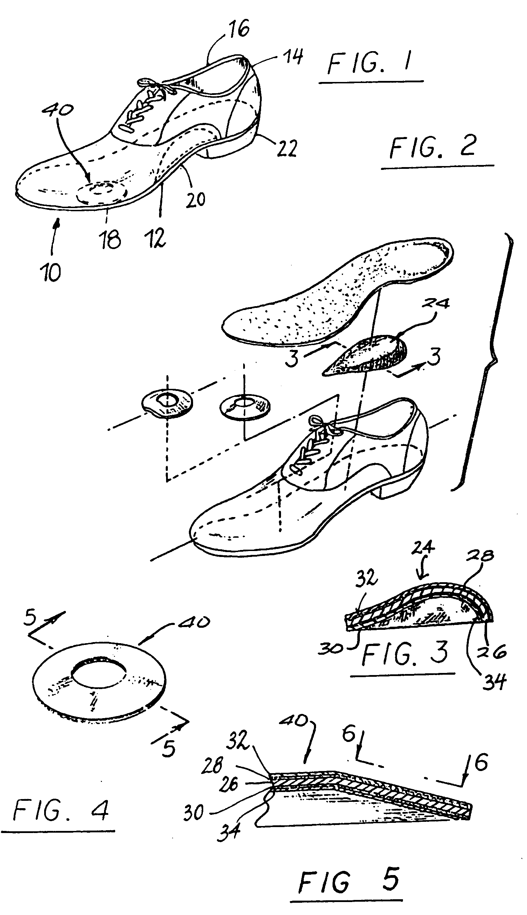

An arch support 24 (Figures 2 and 3) is disposed in the arch portion 20 of the shoe. The arch support 24 may be made from a material such as disclosed and claimed in United States patent 4,778,717 issued to me on October 18, 1988, for "Thermoplastic Thermoformable Composite Material" and assigned of record to the assignee of record of this application.

The arch support 24 may be formed from a plurality of layers such as layers 26, 28 and 30. The layer 26 may be formed from a thermoplastic material such as an acrylic having a suitable thickness such as approximately fifty thousandths of an inch (0.050" 1,27mm). The layers 28 and 30 are disposed on opposite sides of the thermoplastic layer 26 and are provided with a suitable thickness such as approximately eight or nine thousandths of an inch (0.008"-0.009"(0,2032-0,2286mm)).

The layers 28 and 30 are integrated with the thermoplastic material of the layer 26 so as to be firmly bonded to the layer 26. The layers 28 and 30 may be made from a suitable material such as a carbon, glass or aramid fabric. The fabric may be formed from threads extending in two (2) coordinate directions to define a warp and a woof. One of the coordinate directions may be in the longitudinal direction of the shoe and the other coordinate direction may be in the width of the shoe. Instead of being woven, the material in the fabric layers 28 and 30 may be formed of unidirectional fibers or chopped or matted fibers randomly or non-randomly oriented.

If desired, layers 32 and 34 made from the thermoplastic material are respectively bonded to the layers 28 and 30. Each of the layers 32 and 34 may have a suitable thickness such as approximately one or two thousandths of an inch (0.001"-0.002"(0,0254-0,0508mm)). The layers 32 and 34 protect the fabric in the layers 28 and 30 and prevent the fabric from wearing as by abrasion from a wearer's foot as the foot adjusts position in the shoe during walking or running. In the fabricated form of the arch support 24, the layers 32 and 34 may be considered to be integral with the layer 26.

As will be seen, the thermoplastic layer 26 definitely represents the majority of the volume of the composite sheet defining the arch support 24. Since the fabric layers 28 and 30 are woven and the thermoplastic material of the layer 26 impregnates the fabric layers 28 and 30, the actual fiber volume of the fabric layers 28 and 30 may represent approximately thirteen percent (13%) of the total volume of the composite material. However, the range of fiber volume may be varied between about five percent (5%) and about thirty three percent (33%), the preferred volume being between about eight percent (8%) and about twenty five percent (25%).

Since the layer 26 is thermoplastic, it can be heated and shaped. If the shape is not entirely desirable, it can be reheated and reshaped. Since it comprises most of the volume in the arch support 24, the thermoplastic material in the layer 26 tends to flow relative to the layers 28 and 30, thereby facilitating the shaping and/or reshaping of the arch support. The fabric layers 28 and 30 tend to impart stiffness and rigidity to the arch support 24. Since the fabric layers 28 and 30 constitute only a relatively proportion of the arch support 24 by volume, they allow the thermoplastic layer to move somewhat independently relative to the fabric layers during the shaping and/or reshaping operation. This allows the arch support 24 to assume any desired shaped without any wrinkling or delaminating of the composite material.

The properties of the arch support can be adjusted somewhat by varying the thickness of the fabric layers 28 and 30 in the composite material. With relatively low percentages of the fabric layers 28 and 30 by thickness, the stiffness and rigidity of the composite material are reduced and the capability of shaping the composite material are increased. With relatively high percentages of the fabric layers 28 and 30 by thickness, the stiffness and rigidity of the composite material are increased and the capability of shaping the composite material is decreased.

The composite material for the arch support 24 may be formed by initially extruding the layer 24 of the thermoplastic material in sheet form. The fabric layers 28 and 30 are then properly positioned relative to the layer 26 of the thermoplastic material and the layered structure is then subjected to heat and pressure to impregnate the layers 28 and 30 of fabric with the thermoplastic material and to partially cure the thermoplastic material. The composite structure may then be stored, preferably at a cold temperature to prevent the curing of the thermoplastic material from continuing at ambient temperatures.

When it is desired to use the composite material, it may be cut to the desired shape to form a member such as the arch support 24 and the arch support 24 may then be formed at elevated temperatures into the desired shape. In this forming and shaping operation, the curing of the thermoplastic material may be completed. Temperatures, pressures and times of forming and shaping the composite material are not specified since the thermoplastic material is well known in the art and the methods of forming and shaping the thermplastic material are well known in the art.

When the arch support 24 is formed from the composite material discussed above, it has certain advantages over the arch supports of the prior art. One advantage is that it can be shaped to any desired configuration without wrinkling or delaminating. This is desirable because it enhances the comfort of the shoe to, and the tolerance of the shoe by, the wearer. If the shape of the arch is not completely to the satisfaction of the wearer, the arch support can be reshaped relatively easily by heating the composite material to an elevated temperature and then reconfiguring the arch support.

The arch support also has other advantages. It has a greater torsional deflection than a longitudinal deflection or a lateral direction. This results from the fact that the threads defining the warp of the fabric layers 28 and 30 impart a stiffness or rigidity to the fabric in the longitudinal (x) direction and the threads defining the woofs of the fabric layers 28 and 30 impart a stiffness or rigidity to the fabric in the lateral (y) direction. However, since the fabric layers 28 and 30 do not have a stiffness or rigidity in the third (3) direction and since the core material 26 is made from a pure resin, the composite material 24 has a relatively great torsional flexibility or resilience. The ability of the composite material to provide torsional deflection to the arch support 24 enhances the comfort of the shoe to, and the tolerance of the shoe by, the wearer.

The ability of the arch support 24 to provide torsional deflection may be seen from the following table:

Table 1

| Simple vs. Torsional Bending (a material comparison) | | | |
|---|---|---|---|
| Material | Thickness In Inches/mm | Longitudinal Deflection in Inches/mm | Torsional Deflection In Inches/mm |
| Material of this Invention | 0.075/1,905 | 0.175/4,445 | 0.210/5,334 |
| Rohadur (an acrylic) | 0.140/3,556 | 0.160/4,064 | 0.080/2,032 |
| Polypropylene (a polyolefin) | 0.188/4,775 | 0.260/6,604 | 0.175/4,445 (estimated) |
| Subortholene (a polyolefin) | 0.166/4,216 | 0.485/12,379 | 0.240/6,096 |
| Laminated Composite (a laminated carbon fabric) | 0.075/1,905 | 0.160/4,064 | 0.090/2,286 |

As will be seen, the material of this invention is the only material which is used in arch supports and which has a torsional deflection greater than the longitudinal deflection. Similar results would occur if the torsional deflection of the different materials specified above were compared against their lateral deflections. In providing the comparison in Table 1, the materials were tested in the thicknesses in which they are used as arch supports in shoes.

The advantage of the material of this invention over other materials now used as arch supports may be seen from the following table:

Table 2

| Bitolerant Control Index | | |
|---|---|---|
| Material | Thickness in Inches/mm | Value |
| Material of this Invention | 0.075/1,905 | 2.4 |
| Rohadur (an acrylic) | 0.140/3,556 | 1 |
| Polypropylene | 0.188/4,775 | 1.4 |
| Subortholene | 0.160/4,064 | 1.3 |
| Ortholene | 0.160/4,064 | 1.3 |
| Laminated Composite | 0.075/1,905 | 1.2 |

In Table 2, the value in the right column is the ratio of the torsional deflection to the longitudinal deflection as determined from the values shown in Table 1. In Table 2, the ratio of the torsional deflection to the longitudinal deflection for Rohadur is chosen as a value of one (1). The ratio for each of the other materials is then compared to the ratio arbitrarily determined as 1 for Rohadur.

The material of this invention also has other advantages for use as an arch support. This results from the fact that the material exhibits a considerable amount of springiness, particularly in comparison to the materials now used as arch supports in shoes. This may be seen from the following table:

Table 3

| Strain Energy Analysis | | | |
|---|---|---|---|
| Material | Theoretical Amount of Strain Energy Available | Useable Amount of Strain Energy | Ratio |
| Material of this Invention | 1167 | 420 | 8.4 |
| Rohadur | 849 | 136 | 2.7 |
| Polypropylene | 245 | 88 | 1.8 |
| HDPE | 168 | 80 | 1.6 |
| Ortholene | 100 (estimated) | 50 (estimated) | 1.0 |
| Subortholene | 285 (estimated) | 100 (estimated) | 2 |

In Table 3, the ratio is obtained by taking the value of "50" as a denominator. The value of "50" is taken as a denominator because this is the useable value determined for ortholene. The numerator is the useable amount of strain energy for each material. For example, the numerator for Rohadur is "136". The ratio for each material is obtained by dividing the numerator by the denominator. As will be seen, the material of this invention is considerably more efficient in storing energy than any of the materials in Table 3 since it has a higher ration than any of the other material. For example, the material of this invention is 3.1 times more efficient in storing energy than Rohadur. In Table 3, the strain energy is the energy that each specified material is able to store in the longitudinal direction every time that the wearer of the shoe takes a step when the shoe has an arch support made from the specified material.

Table 4 illustrates the effect of the thickness of the composite material used as the arch support 24 when a person weighing approximately two hundred and twenty pounds (220#) wears shoes incorporating such arch supports.

Table 4

| Springiness in the Composite Material | | |
|---|---|---|
| Thickness of Material in Thousandths of an Inch / $mm^{-3}$ | Durability Stress Ltd. (%) | Available Strain Energy (Pounds per square inch) $Kg/cm^2$ (Theoretical) |
| 55/1397 | 56.4 | 420/29,5 |
| 65/1651 | 46.9 | 197/13,85 |
| 75/1905 | 40.3 | 168/11,81 |
| 85/2159 | 35.5 | 149/10,47 |

In Table 4, the lower the durability number, the greater is the life of the arch support. The composite material used in the arch support 24 and described above lasts millions of cycles without any significant deterioration in the properties described above.

The advantageous properties of the composite material described above are enhanced by using extruded sheets of the core material 26. The extruded core material 26 produce a more forgiving composite than the cast core material, particularly in the torsional direction. This means that the extruded core material is softer in the torsional direction than the molded core material. This allows the torsional deflection of the composite material to be greater than the longitudinal or lateral deflections. Furthermore, the extruded core material 26 can be shaped better and more easily through a wider range of temperatures than the molded core material. This enhances the ability of the extruded core material 26 to provide the arch support 24 with any desired shape on a wrinkle-free basis.

The composite material described above can also be used as an insert 40 (Figures 4 and 5) at the ball portion 18 of the shoe 10. The insert 40 can be provided with a suitable configuration such as a non-directional Belleville spring as illustrated in Figures 4 and 5. Alternatively, the insert 40 can be shaped so that the kinetic energy in the downward movement of the shoe can be converted to potential energy substantially only at positions aligned in the longitudinal direction of the shoe. Such a unidirectional insert is shown as an alternative embodiment for a heel but the same type of unidirectional member can be used as the insert 40.

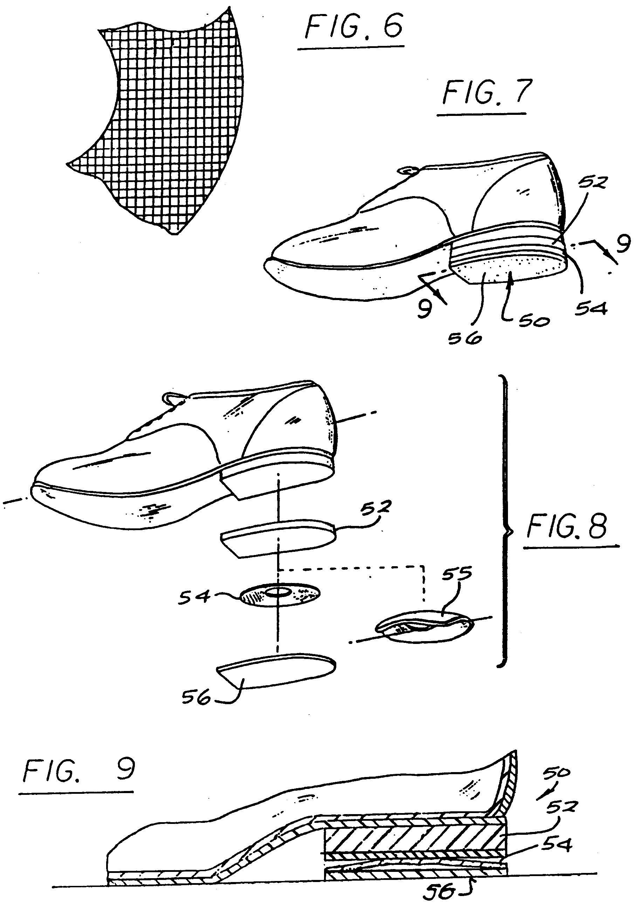

Figure 7 illustrates a heel generally indicated at 50 and coming within the scope of this invention. The heel 50 includes a layer 52 made from a suitable viscoelastic material has properties of absorbing kinetic energy produced in the downward movement of the shoe without converting this energy to potential energy.

A layer 54 made from the composite material described above is disposed on the viscoelastic layer 52. The layer 54 has properties of converting kinetic energy to potential energy in the downward movement of the shoe and of converting the potential energy to kinetic energy in the upward movement of the shoe. The layer 54 may be non-directional or it may be directional in a manner such as illustrated at 55 in Figure 8. When the layer is unidirectional, the conversion of the kinetic energy to potential energy occurs substantially only at positions aligned in the longitudinal direction of the shoe 10. Although the layer 54 and 55 are shown as being a part of the heel 50, the layer 54 or the layer 55 may be disposed inside the shoe.

A heel 56 made from a suitable material such as rubber or leather is disposed on the layer 54. Since the heel constitutes the exposed layer, it contacts the ground when the wearer of the shoe 10 walks or runs. It also provides a pleasing appearance to the shoe.

The following features and embodiments of the invention are of particular importance for the invention:

An arch support for use in a shoe having longitudinal and lateral directions disposed in a coordinate relationship, comprising

a thermoplastic composite material made from a pair of spaced fabrics having a warp and a woof disposed in perpendicular relationship to each other and from a thermoplastic core material disposed between the spaced fabrics and integrated with the spaced fabrics, the fabrics having properties of providing a greater stiffness to the thermoplastic composite material in the longitudinal and lateral directions of the shoe than in the torsional direction of the shoe,

the composite thermoplastic material having properties of being transformed and retransformed in shape at any desired temperature above a particular elevated temperature,

the thermoplastic composite material being shaped at the particular elevated temperature to define the arch support for the shoe,

the warp of the fabric being disposed in the longitudinal direction of the shoe and the woof of the fabric being disposed in the lateral direction of the shoe,

the thickness of the core material being greater than the combined thicknesses of the pair of spaced fabrics.

In said arch support

the core of the composite material being extruded in sheet form and the sheets being cut to provide a blank for forming the arch support and the blank being shaped three dimensionally at the particular elevated temperature to form the arch support.

In this arch support

the fabric being formed from a material selected from the group consisting of carbon, glass and aramid and the thermoplastic constituting an acrylic.

In combination,

a shoe having a sole and a cover attached to the sole to define a pocket for receiving a foot having an arch, the shoe defining a longitudinal direction corresponding to the forward direction of movement of the shoe and defining a lateral direction perpendicular to the longitudinal direction, and

an arch support in the shoe at the position of the arch in the foot when the foot is disposed in the shoe, the arch support having an arched configuration and being constructed to be stiffer in the longitudinal and lateral directions of the shoe than in the torsional direction of the shoe to accommodate the foot during walking or running,

the arch support being made from a thermoplastic composite material having properties of being shaped and reshaped to meet the arch requirements of the foot to be disposed in the shoe.

In said combination wherein

the thermoplastic composite material includes a layer of a thermoplastic material and layers of a fabric material, the thermoplastic material being disposed between, and being bonded to, the layers of the fabric material, the fabric material having properties of stiffening the arch support in the longitudinal and lateral directions more than in the torsional direction, the thickness of the layer of the thermoplastic material being greater than the combined thicknesses of the layers of the fabric material.

**EP 0 516 874 A1**

In the last mentioned combinaton

the fabric material is formed from threads interrelated to define a warp and a woof for imparting a greater stiffness to the arch support in the longitudinal direction and the lateral direction than in the torsional direction.

In the afore-mentioned combination

the composite thermoplastic material is extruded in sheet form and is thereafter cured and the composite thermoplastic material is thereafter heated and shaped to define the arch support.

In the second-mentioned combination including,

a heel support in the shoe, the heel support including a spring member made from a thermoplastic composite material for storing energy during the implantation of the heel of the foot on the ground and for releasing such energy upon the lifting of the heel of the foot from the ground, and

a layer of a viscoelastic material disposed in cooperative relationship with the heel support and having properties of absorbing at least partially the potential energy produced in the spring member during the implantation of the heel of the foot on the ground.

In another combination,

a shoe including a sole and a heel defining a longitudinal direction corresponding to the direction of the forward movement of the shoe,

a spring member made from a thermoplastic composite material and disposed in the heel and constructed to retain potential energy substantially only in the longitudinal direction of the shoe upon the disposition of the heel of the shoe on the ground and to release this potential energy upon the lifting of the heel of the shoe from the ground, and

a viscoelastic material disposed in the heel in cooperative relationship with the spring member for absorbing at least some of the potential energy in the spring member in the longitudinal direction in each disposition of the heel of the shoe on the ground.

In said combination

the viscoelastic material being disposed in a layer on the sole of the shoe and the spring member being disposed on the layer of the viscoelastic material.

In a combination as mentioned

the spring member being formed from a layer of a composite material defined by a thermoplastic core and fabric layers disposed on opposite sides of the thermoplastic layer and bonded to the thermoplastic layer, the thickness of the thermoplastic core being greater than the combined thicknesses of the layers of the fabric material.

A heel in a shoe, the heel having a longitudinal direction corresponding to the direction of the forward movement of the shoe including;

a layer of a viscoelastic material having properties of partially absorbing kinetic energy exerted upon the viscoelastic material upon the disposition of the heel of the shoe on the ground, and

a layer of a thermoplastic composite material disposed on the layer of viscoelastic material and having properties of, and shaped for, converting to potential energy the kinetic energy exerted upon the shoe substantially only in the longitudinal direction upon the disposition of the shoe on the ground and converting the potential energy to kinetic energy upon the lifting of the shoe from the ground.

In said heel in a shoe

the thermoplastic composite layer being formed of a layer of a thermoplastic material and layers of a fabric disposed on the opposite surfaces of the layer of the thermoplastic material and bonded to the thermoplastic material, the thickness of the layer of the thermoplastic material being greater than the combined thicknesses of the layers of the fabric.

In said heel in a shoe, the shoe also having a sole,

the thermoplastic composite layer being further removed from the sole than the viscoelastic layer, and

a heel member disposed on the thermoplastic composite layer and being further removed from the sole than the thermoplastic composite layer.

In the same heel in a shoe

the thermoplastic composite layer being in the form of a Belleville spring to convert the potential energy to kinetic energy at positions disposed in the longitudinal direction of the shoe.

In another combination,

a shoe having a sole portion and a heel portion,

a layer of a viscoelastic material disposed on the heel portion of the shoe and having properties of absorbing energy imparted to the shoe, and

a layer of a thermoplastic composite material disposed on the layer of the viscoelastic material and having properties of, and being shaped for, converting to potential energy the energy produced substantially

7

only in the direction of the forward movement of the shoe and resulting from the disposition of the heel of the shoe on the ground during the movement of the shoe in the forward direction and converting such potential energy to kinetic energy in the forward direction upon the lifting of the heel of the shoe from the ground.

In said combination

the layer of the thermoplastic composite material being shaped to define a Belleville spring.

In the last mentioned combination

the layer of the thermoplastic composite material including a layer of a thermoplastic material and layers of a fabric material, the layer of the thermoplastic material being bonded to the layers of the fabric material on the opposite sides of the layer of the thermoplastic material, the thickness of the layer of the thermoplastic material being greater than the combined thicknesses of the layers of the fabric material.

In a combination as mentioned earlier

an arch support in the shoe, the arch support being made from the thermoplastic composite material and being stiffer in the longitudinal and lateral directions than in the torsional direction.

In said combination

the thermoplastic composite material including a layer of a thermoplastic material sandwiched between layers of a fabric and the fabric being impregnated with the thermoplastic material.

In the last mentioned combination

the arch support being shaped in accordance with the individual characteristics of the foot inserted into the shoe.

In a combination as mentioned earlier

a member made from the thermoplastic composite material and disposed in the ball portion of the shoe and constructed and shaped to convert to potential energy the kinetic energy produced substantially only in the direction of the forward movement of the shoe upon the disposition of the ball portion of the shoe on the ground and to convert the potential energy to kinetic energy upon the lifting of the ball portion of the shoe from the ground.

In said combination

the member in the ball portion of the shoe including a layer of a thermoplastic material and layers of a fabric, the thermoplastic material being sandwiched between the layers of the fabric and the layers of the fabric being bonded to the thermoplastic material, the thickness of the layer of the thermoplastic material being greater than the combined thicknesses of the layers of the fabric.

In the first-mentioned combination

a heel on the shoe, the heel including a first layer having properties of absorbing energy and a second layer made from a thermoplastic composite material and disposed on the first layer and having properties of storing energy upon the disposition of the heel of the shoe on the ground and releasing the stored energy upon the lifting of the heel of the shoe from the ground.

In said combination

the arch support and the second layer in the heel being made from the same thermoplastic composite material and including a layer of a thermoplastic material and layers of a fabric bonded to the thermoplastic material on opposite surfaces of the thermoplastic material, the thickness of the layer of the thermoplastic material being greater than the combined thicknesses of the layers of the fabric.

In the last mentioned combination

the fabric being formed from threads defining a warp and a woof, the warp and the woof having a coordinate relationship, the warp of the fabric being disposed in the longitudinal direction of the shoe and the woof of the fabric being disposed in the lateral direction of the shoe.

In the last mentioned combination

the second layer in the heel of the shoe being shaped to release the stored energy only in the longitudinal direction of the shoe.

In the first mentioned combination

a member in the ball portion of the shoe, the member being made from a thermoplastic composite material and having properties of storing energy upon the disposition of the ball portion of the shoe on the ground and of releasing the stored energy upon the lifting of the ball portion of the shoe from the ground.

In said combination

the arch support and the member being made from the same thermoplastic composite material and including a layer of a thermoplastic material and layers of a fabric bonded to the thermoplastic material on opposite surfaces of the thermoplastic material, the thickness of the layer of the thermoplastic material being greater than the combined thicknesses of the layers of the fabric.

In said combination

the fabric being formed from threads defining a warp and a woof, the warp and the woof having a coordinate relationship, the warp of the fabric being disposed in the longitudinal direction of the forward movement for the shoe and the woof of the fabric being disposed in a direction perpendicular to the direction of the forward movement of the shoe.

In a combination as mentioned earlier

the thermoplastic composite member in the ball portion of the shoe being shaped to release the stored energy only in the longitudinal direction of the shoe.

In a combination,

a shoe having a sole and a cover attached to the sole to define a pocket for receiving a foot, the shoe having a longitudinal direction corresponding to the direction of forward movement of the shoe and having a lateral direction perpendicular to the longitudinal direction, and

an arch support disposed in the shoe and made from a thermoplastic composite material and having an arched configuration and being stiffer in the longitudinal and lateral directions than in the torsional direction and constructed to store potential energy upon the disposition of the shoe on the ground and to return this energy to the shoe in the form of kinetic energy upon the subsequent removal of the shoe from the ground.

In said combination

the thermoplastic composite material being defined by a pair of spaced fabrics and a thermoplastic material disposed between the fabrics and bonded to the fabrics, the thickness of the layer of the thermoplastic material being greater than the combined thicknesses of the layers of the fabric.

In said combination,

the thermoplastic material being an acrylic.

In said combination

the arch support being capable of being shaped and reshaped at an elevated temperature to provide an individual shape of the arch support and the thermoplastic material included in the arch support being extruded.

A method of forming an arch support, including the steps of:

providing layers of a fabric material,

extruding a first layer of a thermoplastic material, the thickness of the layer of the thermoplastic material being greater than the combined thicknesses of the layers of the fabric material,

disposing the first layer of the thermoplastic material between the layers of the fabric material,

subjecting the first layer of the thermoplastic material and the layers of the fabric material to heat and pressure to produce a sheet of a thermoplastic composite material in which the first layer of the thermoplastic material becomes bonded to the layers of the fabric material, and

shaping the thermoplastic composite material at an elevated temperature to form the arch support.

Said method including the steps of:

cutting blanks from the sheet of the thermoplastic composite material,

heating the blanks of the thermoplastic composite material to an elevated temperature, and

shaping the blanks to a particular configuration to define the arch support.

In a method as mentioned

the fabric material is selected from a group consisting of carbon, glass and an aramid and

the thermoplastic material constitutes an acrylic.

A method as mentioned wherein

additional layers of a thermoplastic material are disposed on the opposite surfaces of the layers of fabric material from the first layer of the thermoplastic material and are integrated with the fabric material, the additional layers of the thermoplastic material being thinner than the first layer of the thermoplastic material.

In combination in a thermoplastic composite material,

an extruded layer of a thermoplastic material,

layers of a fabric material on opposite sides of the extruded layer of thermoplastic material,

additional layers of the thermoplastic material disposed on the surfaces of the layers of the fabric material opposite the extruded layer of the thermoplastic material,

the extruded layer of the thermoplastic material and the layers of the fabric material and the additional layers of the thermoplastic material being bonded to one another,

the thickness of the extruded layer of the thermoplastic material being greater than the combined thicknesses of the layers of the fabric material and the additional layers of the thermoplastic material.

**Claims**

9

**EP 0 516 874 A1**

1. Thermoplastic composite material, **characterised by**

   a layer (26) of a thermoplastic material, at least one layer (28, 30) of a fabric material on the side of the layer (26) of said thermoplastic material, the layers (26, 28, 30) of the thermoplastic material and the fabric material being bonded to one another, the thickness of the layer (26) being greater than the thickness of the layer (28, 30).

2. Thermoplastic composite material as in Claim 1, **characterised in that**

   a fabric material layer (28, 30) being bonded to each of the opposite sides of the layer (26) of the thermoplastic material, the thickness of the layer (26) being greater than the combined thicknesses of the layers (28, 30).

3. Thermoplastic composite material as in Claims 1 or 2, **characterised in that**

   an additional layer (32, 34) of the thermoplastic material disposed on the surface of the layer (28, 30) of the fabric material opposite the extruded layer (26) of the thermoplastic material,

   the layer (26) and the layers (28, 30) and the additional layers (32, 34) being bonded to one another.

4. Thermoplastic composite material as in Claims 1, 2 or 3 additional layers (32, 34) of the thermoplastic material disposed on the surfaces of the layers (28, 30) of the fabric material opposite the extruded layer (26) of the thermoplastic material, the layer (26) and the layers (28, 30) and the additional layers (32, 34) being bonded to one another, the thickness of the layer (26) being greater than the combined thicknesses of the layers (28, 30) and the additional layers (32, 34)

5. Thermoplastic composite material as in Claims 1 to 4 **characterised in that**

   each fabric material layer (28, 30) being impregnated with thermoplastic material, preferably with the thermoplastic material of said layer (26).

6. Thermoplastic composite material, **characterised by**

   an extruded layer (26) of thermoplastic material

7. Thermoplastic composite material as in Claim 1, **characterised in that**

   said composite material being extruded with the at least one fabric layer (28, 30) bonded to the layer (26) of thermoplastic material.

8. Thermoplastic composite material as in Claims 1 to 5 **characterised in that**

   said thermoplastic composite material being extruded with the fabric material layers (28, 30) bonded to the opposite sides of said layer (26) of the thermoplastic material and, preferably, the additional thermoplastic layers (32, 34) bonded to said fabric material layers (28, 30)

9. Thermoplastic composite material as in Claims 1 to 8, **characterised in that**

   the fabric material being selected from the group consisting of carbon, glass and/or aramid and the thermoplastic material being an acrylic.

10. Thermoplastic composite material as in Claims 1 to 8, **characterised in that**

    the thermoplastic material is acrylic.

11. Thermoplastic composite material as in Claims 1 to 9, **characterised in that**

    each fabric material layer (28, 30) being made of interrelated threads forming warps and woofs

10

disposed in perpendicular relationship to each other, the fabric material layer (28, 30) having properties of providing a greater stiffness to the thermoplastic composite material in the longitudinal and lateral directions than in the torsional direction.

**12.** Thermoplatic composite material as in Claims 1 to 11, **characterised in that**

it has properties of being transformed and retransformed in shape at any desired temperature above a particular elevated temperature, said thermoplastic composite material being 3-dimensionally shaped, preferably in a mold, at the particular elevated temperature to define an insert for a shoe, being reshapable by application of the particular elevated temperature and pressure.

**13.** Thermoplastic composite material as in Claim 12, **characterised in that**

the thermoplastic composite material being shaped to define a Belleville spring.

**14.** Shoe (10), having a sole (12), a ball portion (18), an arch portion and a heel portion with a heel (50), **characterised in that**

said shoe (10) contains at least one insert with spring-properties, said insert consisting of a 3-dimensionally shaped or re-shaped blank of the thermoplastic composite material as in at least one of Claims 1 to 12.

**15.** Shoe as in Claim 14, **characterised in that**

said insert constitutes an arch support (24) having an arched configuration for the arch portion of a shoe (10), a heel support (55) for the heel portion or the heel (50) of the shoe, a ball portion insert for the ball portion of the shoe, or a spring member (40) for the sole of the shoe, respectively.

**16.** Shoe as in Claims 14 and 15, **characterised in that**

the warps and the woofs in the fabric layers (26, 28) of the arch support (24) being disposed in the longitudinal direction and in the lateral direction of the shoe (10), respectively, providing a greater stiffness in the longitudinal and lateral directions than in the torsional direction of the shoe.

**17.** Shoe as in Claim 15, **characterised in that**

the arch support (24) being constructed to store potential energy upon the disposition of the shoe on the ground and to return this energy to the shoe in the form of kinetic energy upon the subsequent removal of the shoe from the ground, and that the arch support (24) being shaped or re-shaped to meet the arch requirements of the foot to be disposed in a shoe and in accordance with the individual characteristics of the foot inserted into the shoe.

**18.** Shoe as in Claim 15, **characterised in that**

the heel support for the heel portion or the heel (50) includes a first layer (52) having properties of absorbing energy and a second layer (54, 55) made from the thermoplastic composite material and having properties of storing energy upon the disposition of the heel (50) of the shoe on the ground and releasing the stored energy upon the lifting of the heel (50) from the ground, said first layer (52) being disposed above or below said second layer (54, 55) respectively.

**19.** Shoe as in Claim 18, **characterised in that**

said heel support second layer (54, 55) being a spring member made from said thermoplastic composite material, and that said first layer (52) being made of a viscoelastic material disposed in cooperative relationship with said spring member and having properties of absorbing at least partially the potential energy produced in the spring member during the implantation of the shoe on the ground, and that said heel support being provided inside the shoe or within the heel (50).

**20.** Shoe as in Claim 19, **characterised in that**

said heel support spring member being constructed to retain potential energy substantially only in the longitudinal direction of the shoe, and that said first layer (52) made of viscoelastic material being disposed on the sole (12) of the shoe below said spring member (54, 55) for absorbing at least some of the potential energy in the spring member in the longitudinal direction in each disposition of the heel (50) of the shoe (10) on the ground.

**21.** Shoe as in Claims 19 and 20, **characterised in that**

the spring member (54, 55) being further removed from the sole (12) than the viscoelastic first layer (52), and that a heel member (56) is disposed on the spring member (54, 55) and being further removed from the sole (12) than the spring member.

**22.** Shoe as in Claims 14 and 15, **characterised in that**

the ball portion insert being a spring-member (40) being made of said thermoplastic composite material and having properties of storing energy upon the disposition of the ball portion (18) on the ground and of releasing the stored energy upon the lifting of the ball portion from the ground, and being constructed and shaped to convert to potential energy the kinetic energy produced substantially only in the direction of the forward movement of the shoe upon the disposition of the ball portion (18) on the ground and to convert the potential energy to kinetic energy upon the lifting of the ball portion from the ground.

**23.** Shoe as in Claims 19 to 22, **characterised in that**

said spring member (40, 54, 55) consisting of at least one layer of thermoplastic composite material being shaped to define a Belleville spring.

**24.** Insert for use in a shoe as an arch support, a ball portion support, a heel-portion or heel-support, **characterised in that**

it consists of at least one 3-dimensionally shaped blank of a thermoplastic composite material as in at least one of Claims 1 to 12.

**25.** Insert as in Claim 24, **characterised in that**

it is shaped from thermoplastic composite material having a thermoplastic core layer (26) and at least one fabric material layer (28, 30) bonded to said core layer (26), the thickness of said core layer (26) being greater than the thickness of said fabric layer (28, 30) or the combined thicknesses of two such fabric material layers (28, 30) being bonded to opposite sides of said core layer (26), said thermoplastic composite material being shaped as said shoe insert to provide spring characteristics.

**26.** Insert as in Claim 24 and 25, **characterised in that**

it is constructed and shaped to be stiffer in two coordinate directions than in torsional direction, said coordinate directions being defined by the warp and woof-directions of interrelated threads within the fabric layers (28, 30) of the thermoplastic composite material.

**27.** Insert as in Claims 24 and 25, **characterised in that**

it is 3-dimensionally shaped to convert to potential energy at least a part of the kinetic energy deforming the insert and to convert potential energy to kinetic energy, preferably only in one direction of said insert.

**28.** Insert as in Claim 27, **characterised in that**

in cooperative relationship with said insert at least one additional layer (52) of a viscoelastic material is disposed above or below the insert, said layer (52) having energy-absorbing properties.

29. Method for forming an insert for use in a shoe, **characterised by the steps of**

providing at least one layer of a fabric material, providing a layer of a thermoplastic material, the thickness of the layer of the thermoplastic material being greater than the thickness of the layer of fabric material, or the combined thicknesses of two layers of the fabric material, respectively, disposing the layer of the thermoplastic material on the layer of the fabric material or between the layers of the fabric material, respectively, subjecting the first layer of the thermoplastic material and the layer or the layers of the fabric material to heat and pressure to produce a cured sheet of a thermoplastic composite material in which the layer of the thermoplastic material becomes bonded to the layer or the layers of the fabric material, and shaping the thermoplastic composite material sheet at an elevated temperature, preferably in a mold, to form an insert for a shoe, preferably an arch support, a spring member for the ball portion or a heel support for the heel portion or the heel of a shoe, respectively.

30. Method as in Claim 29, **characterised by the steps**

of cutting at least one blank from the sheet of thermoplastic composite material, heating the blank to an elevated temperature, and shaping the blank into the 3-dimensionally configuration of a shoe insert.

31. Method as in Claim 29, **characterised in that**

additional layers of a thermoplastic material are disposed on the opposite surfaces of the layers of fabric material from the first layer of the thermoplastic material and are integrated, preferably cured, with the fabric material.

32. Method as in Claims 29 to 31, **characterised in that**

the composite thermoplastic material is extruded in sheet form, having the layer or layers of fabric material already bonded to the layer of thermoplastic material, and is preferably thereafter cured and thereafter heated and shaped to define an insert for a shoe, preferably an arch support with arched configuration.

FIG. 1

FIG. 2

FIG. 3

FIG. 4

FIG 5

_FIG. 6_

_FIG. 7_

_FIG. 8_

_FIG. 9_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4 778 717 (FITCHMUN) | 1-10,12, 14,15, 24,25, 29-32 | B32B27/12 A43B7/22 A43B13/18 A43B21/26 |
| | * the whole document * | | |
| D,Y | * idem * | 11,13, 16-23, 26-28 | |
| | --- | | |
| Y | WO-A-8 103 602 (MCMAHON ET AL.) | 13, 17-23, 27,28 | |
| | * page 20, line 9 - page 21, line 7; figure 3 * * page 36, line 5 - page 37, line 6; figure 12 * --- | | |
| Y | US-A-4 651 445 (HANNIBAL) * column 3, line 1 - line 18; figure 4 * --- | 11,16,26 | |
| A | PATENT ABSTRACTS OF JAPAN vol. 14, no. 256 (M-980)(4199) 4 June 1990 & JP-A-2 072 232 ( DAIDO STEEL CO LTD ) * abstract * --- | 13 | TECHNICAL FIELDS SEARCHED (Int. Cl.5) |
| A | EP-A-0 102 414 (FOSS MANUFACTURING COMPANY) --- | 1-12 | B32B A43B |
| A | EP-A-0 198 951 (GLOBUS FUSSSTÜTZENFABRIK KARL KREMENDAHL) * page 10, line 29 - page 11, line 27 * --- | 12,14, 15,24, 29,30 | |
| A | US-A-4 267 648 (WEISZ) * figures 1,4 * ----- | 17-23 | |

The present search report has been drawn up for all claims

| Place of search | Date of completion of the search | Examiner |
|---|---|---|
| THE HAGUE | 10 AUGUST 1992 | MATHEY X.C.M. |